# EUROPÄISCHE PATENTANMELDUNG

(11) **EP 4 106 062 A1**
(43) Veröffentlichungstag der Anmeldung: **21.12.2022**
(21) Anmeldenummer: 21180182.4
(22) Anmeldetag: 17.06.2021
(51) Int. Cl.: H01M 10/04, H01M 10/42, H01M 10/48

(54) **ZELLE UND VERFAHREN ZU IHRER HERSTELLUNG**

(71) Anmelder: VARTA Microbattery GmbH, 73479 Ellwangen Jagst (DE)
(72) Erfinder: Elmer, Martin, 73479 Ellwangen (DE); Renschler, Philipp, 73479 Ellwangen (DE)
(74) Vertreter: Ostertag & Partner Patentanwälte mbB

(57) **Zusammenfassung**

Zur Energiespeicherung befähigte elektrochemische Zellen (100) weisen neben einem Gehäuse (101), das einen Innenraum einschließt, einen in dem Innenraum angeordneten Verbundkörper (102), der aus mindestens zwei Elektroden und mindestens einem Separator gebildet ist, auf. Es wird vorgeschlagen, die Zellen (100) mit einem RFID-Transponder (103) auszustatten, dessen Speicher Daten zu den Zellen (100) enthält.

## Beschreibung

### ANWENDUNGSGEBIET UND STAND DER TECHNIK

Die nachstehend beschriebene Erfindung betrifft eine zur Energiespeicherung befähigte elektrochemische Zelle sowie ein Verfahren zur Herstellung einer solchen elektrochemischen Zelle.

Zur Energiespeicherung befähigte elektrochemische Zellen sind dazu in der Lage, gespeicherte chemische Energie durch eine Redoxreaktion in elektrische Energie umzuwandeln. Sie umfassen in der Regel eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und damit die Zelle zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Die weit verbreiteten sekundären Lithium-Ionen-Zellen basieren auf dem Einsatz von Lithium, welches in Form von Ionen zwischen den Elektroden der Zelle hin und her wandern kann. Lithium-Ionen-Zellen zeichnen sich durch eine hohe Energiedichte aus.

Bei der negativen und der positiven Elektrode einer Lithium-Ionen-Zelle handelt es sich in der Regel um sogenannte Kompositelektroden, die neben elektrochemisch aktiven Komponenten (insbesondere Komponenten, die Lithium-Ionen reversibel interkalieren und deinterkalieren können) auch elektrochemisch inaktive Komponenten (Leitmittel, Elektrodenbinder, Stromkollektoren) umfassen. Die Kompositelektroden werden bei der Herstellung einer Lithium-Ionen-Zelle mit einem oder mehreren Separatoren zu einem Verbundkörper kombiniert. Hierbei werden die Elektroden und Separatoren, gegebenenfalls unter Anwendung von Druck, miteinander verbunden.

In vielen Ausführungsformen ist der Verbundkörpereben ausgebildet, so dass mehrere Verbundkörper gestapelt werden können. In der Regel kommen zur Bildung solcher Verbundkörper rechteckige Elektroden und Separatoren zum Einsatz. Sehr häufig wird der Verbundkörper aber in Form eines Wickels gebildet oder zu einem Wickel verarbeitet. Hierfür werden bandförmige Elektroden und Separatoren benötigt. In der Regel umfasst der Verbundkörper, unabhängig davon ob gewickelt oder nicht, die Sequenz positive Elektrode / Separator / negative Elektrode. Häufig werden Verbundkörper als sogenannte Bizellen mit den möglichen Sequenzen negative Elektrode / Separator / positive Elektrode / Separator / negative Elektrode oder positive Elektrode / Separator / negative Elektrode / Separator / positive Elektrode hergestellt.

Zur Herstellung der Kompositelektroden wird üblicherweise eine flache Schicht aus einem pastenförmigen Elektrodenmaterial, das neben einem Elektrodenbinder und gegebenenfalls einem Leitmittel eine elektrochemisch aktive Komponente (wird oft auch als Aktivmaterial bezeichnet) in Partikelform enthält, auf einen geeigneten Stromkollektor aufgebracht und anschließend getrocknet. Bevorzugt wird das Elektrodenmaterial auf beide Seiten des Stromkollektors aufgebracht. Produktionstechnisch wird dies meist realisiert, indem die Stromkollektoren als quasi endlose Bänder bereitgestellt werden, die anschließend eine Beschichtungsvorrichtung durchlaufen, in der durch intermittierende Beschichtung eine abgesetzte, in Laufrichtung in definierten Abständen unterbrochene Beschichtung des Stromkollektors erfolgt. Das aus der Beschichtungsvorrichtung austretende Stromkollektorband weist entsprechend in Laufrichtung bevorzugt alternierend beschichtete und unbeschichtete Abschnitte auf.

Eine Auftrennung des Stromkollektorbandes kann anschließend durch Zerschneiden des Bandes in den unbeschichteten Abschnitten erfolgen. Bei Bedarf kann das Stromkollektorband weiterhin in Streifen geschnitten werden. So lassen sich aus jedem der beschichteten Abschnitte zwei oder mehr einzelne Elektroden herstellen.

Nach Verarbeitung der so hergestellten Elektroden zu Verbundkörpern, beispielsweise durch Aufwickeln in einer Wickelmaschine, erfolgt deren Überführung in ein Gehäuse. Die grundsätzliche Funktionsfähigkeit der Zelle kann dann durch Tränkung des Verbundkörpers mit einem Elektrolyten hergestellt werden. Die so gebildete Zelle kann dann einem Funktions- und Leistungstest unterzogen werden.

### AUFGABE UND LÖSUNG

Für die Qualität einer Zelle ist die Fehlerfreiheit der hergestellten Elektroden von zentraler Bedeutung. Die Verwendung fehlerhafter Elektroden bedeutet in der Regel, dass damit gebaute Zellen als Ausschussware aussortiert werden müssen. Auch beim Herstellen der Verbundkörper können Fehler auftreten, die die Funktionsfähigkeit der Zellen beeinträchtigen.

Es wäre wünschenswert, gegebenenfalls auftretende Fehler und Toleranzabweichungen zumindest für die relevantesten Bauteile einer elektrochemischen Zelle möglichst früh zu erkennen und im Idealfall außerhalb einer Toleranz befindliche oder fehlerhafte Bauteile möglichst schnell auszusortieren zu können. Hierzu wäre eine Rückverfolgbarkeit der Bauteile in der Produktionskette erforderlich und natürlich eine entsprechende Möglichkeit zur eindeutigen Identifizierung. Aktuell lassen sich Einzelkomponenten elektrochemischer Zellen bestenfalls Chargen zuordnen. Insbesondere wäre auch von Interesse, einzelne Komponenten einer Zelle Produktionsmaschinen zuordnen zu können, auf denen sie hergestellt wurden.

Zur Lösung dieser Schwierigkeiten werden die Zelle mit den Merkmalen des Anspruchs 1 sowie das Verfahren mit den Merkmalen des Anspruchs 7 vorgeschlagen. Weitere bevorzugte Ausgestaltungen der Zelle und des Verfahrens ergeben sich aus den abhängigen Ansprüchen.

Gegenstand der Erfindung sind zur Energiespeicherung befähigter elektrochemischer Zellen mit einem Verbundkörper, der aus mindestens zwei Elektroden und mindestens einem Separator gebildet ist. Eine erfindungsgemäße Zelle umfasst daher
- ein einen Innenraum einschließendes, bevorzugt aus zwei oder mehr Gehäuseteilen zusammengesetztes Gehäuse, und
- den in dem Innenraum angeordneten, aus den mindestens zwei Elektroden und dem mindestens einen Separator gebildeten Verbundkörper.

Erfindungsgemäß ist die Zelle mit einem RFID-Transponder ausgestattet, dessen Speicher Daten zu der Zelle enthält.

Der RFID-Transponder umfasst neben dem Speicher bevorzugt eine Antenne sowie einen analogen Schaltkreiszum Empfangen und Senden von Daten (Transceiver). Weiterhin umfasstder RFID-Transponder bevorzugt einen digitalen Schaltkreis, bei dem es sich gegebenenfalls um einen kleinen Mikrocontroller handeln kann.

Bei dem Speicher kann es sich um einen permanenten, also nicht veränderlichen Speicher handeln. In einigen Ausführungsformen kann es sich bei dem Speicher aber auch um einen mehrfach beschreibbaren Speicher handeln, in dem Daten geändert und/oder Informationen hinzugefügt werden können.

Bevorzugt handelt es sich bei dem RFID-Transponder um einen passiven Transponder, der über seine Antenne Hochfrequenzenergie aufnehmen und in elektrische Energie umwandeln kann, mit der die übrigen Komponenten des Transponders versorgt werden. In einigen Ausführungsformen kann es sich bei dem Transponder aber auch um einen aktiven RFID-Transponder handeln, dessen Komponenten von einer elektrochemischen Zelle mit elektrischer Energie gespeist werden. Vorliegend kann der Transponder hierzu elektrisch mit den Elektroden des Verbundkörpers verbunden sein.

Bei den erfindungsgemäßen Zellen handelt es sich bevorzugt um sekundäre Lithium-Ionen-Zellen mit den eingangs erwähnten Kompositelektroden aus mit Elektrodenmaterialien beschichteten Stromkollektoren. In dem Verbundkörper sind die Elektroden in der Sequenz positive Elektrode / Separator/ negative Elektrode angeordnet.

Als Aktivmaterialien für Anode und Kathode der Zellen können im Grunde sämtliche für sekundäre Lithium-Ionen-Zellen bekannten elektrochemisch aktiven Komponenten verwendet werden.

In der negativen Elektrode können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Darüber hinaus können auch metallische und halbmetallische Materialien, die mit Lithium legierbar sind, zum Einsatz kommen. So sind beispielsweise die Elemente Zinn, Aluminium, Antimon und Silizium in der Lage, mit Lithium intermetallische Phasen zu bilden. Auch einige Verbindungen von Silizium, Aluminium, Zinn und/oder Antimon können Lithium reversibel ein- und auslagern. Beispielsweise kann in einigen bevorzugten Ausführungsformen das Silizium in oxidischer Form in der negativen Elektrode enthalten sein. Alternativ oderzusätzlich kann auch Lithiumtitanat (Li₄Ti₅O₁₂) oder ein Derivat desselben in der negativen Elektrode enthalten sein, bevorzugt ebenfalls in Partikelform.

Für die positive Elektrode kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}Co_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden.

Die Aktivmaterialien werden bevorzugt in eine Matrix aus einem Elektrodenbinder eingebettet, wobei benachbarte Partikel in der Matrix bevorzugt in unmittelbarem Kontakt miteinanderstehen. Übliche Elektrodenbinder basieren beispielsweise auf Polyvinylidenfluorid (PVDF), Polyacrylat oder Carboxymethylzellulose.

Weiterhin können den Elektroden Leitmittel zugesetzt werden. Leitmittel dienen dazu, die elektrische Leitfähigkeit der Elektroden zu erhöhen. Übliche Leitmittel sind Ruß und Metallpulver.

In der fertigen Zelle ist derVerbundkörper bevorzugt mit einem Elektrolyten getränkt, bevorzugt einem Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF4), Lithiumbis(trifluoromethansulfonyl)imid (LiTFSI), Lithiumbis(fluorosulfonyl)imid (LiFSI) und Lithiumbis(oxalato)borat (LiBOB).

Die Stromkollektoren dienen dazu, im Elektrodenmaterial enthaltene elektrochemisch aktive Komponenten möglichst großflächig elektrisch zu kontaktieren. Bevorzugt bestehen die Stromkollektoren als einem Metall oder sind zumindest oberflächlich metallisiert. Als Metall für den Anodenstromkollektor eignen sich beispielsweise Kupfer oder Nickel oder auch andere elektrisch leitfähige Materialien, insbesondere Kupfer- und Nickellegierungen oder mit Nickel beschichtete Metalle. Auch Edelstahl kommt grundsätzlich in Frage. Als Metall für den Kathodenstromkollektor eignen sich beispielsweise Aluminium oder auch andere elektrisch leitfähige Materialien, insbesondere auch Aluminiumlegierungen.

Bevorzugt werden als Anodenstromkollektor und/oder als Kathodenstromkollektor jeweils Metallfolien, beispielsweise mit einer Dicke im Bereich von 4 µm bis 30 µm, eingesetzt.

Neben Folien können als Stromkollektoren allerdings auch andere Substrate wie metallische oder metallisierte Vliese oder offenporige Schäume oder Streckmetalle verwendet werden.

Als Separator kann beispielsweise eine elektrisch isolierende Kunststofffolie verwendet werden. Damit diese von dem Elektrolyten durchdrungen werden kann, weist sie bevorzugt Mikroporen auf. Die Folie kann beispielsweise aus einem Polyolefin oder aus einem Polyetherketon gebildet sein. Nicht ausgeschlossen ist, dass auch Vliese und Gewebe aus solchen oder ähnlichen Kunststoffmaterialien als Separatoren zum Einsatz kommen können.

Bei der erfindungsgemäßen Zelle, insbesondere der erfindungsgemäßen Lithium-Ionen-Zelle, kann es sich um eine Knopfzelle handeln. Knopfzellen sind zylindrisch ausgebildet und weisen eine Höhe auf, die geringer als ihr Durchmesser ist. Bevorzugt liegt die Höhe der herzustellenden Knopfzelle im Bereich von 4 mm bis 15 mm. Weiter ist es bevorzugt, dass die Knopfzelle einen Durchmesser im Bereich von 5 mm bis 25 mm aufweist. Knopfzellen eignen sich beispielsweise zur Versorgung von kleinen elektronischen Geräten wie Uhren, Hörgeräten und kabellosen Kopfhörern mit elektrischer Energie.

Die Nennkapazität einer erfindungsgemäßen, als Knopfzelle ausgebildeten Lithium-Ionen-Zelle beträgt in der Regel bis zu 1500 mAh. Bevorzugt liegt die Nennkapazität im Bereich von 100 mAh bis 1000 mAh, besonders bevorzugt im Bereich von 100 bis 800 mAh.

Besonders bevorzugt ist die erfindungsgemäße Zelle, insbesondere die erfindungsgemäße Lithium-Ionen-Zelle, eine zylindrische Rundzelle. Zylindrische Rundzellen weisen eine Höhe auf, die größer als ihr Durchmesser ist. Sie eignen sich insbesondere für Anwendungen im Automobilbereich, für E-Bikes oder auch für andere Anwendungen mit hohem Energiebedarf.

Die Höhe erfindungsgemäßer zylindrischer Rundzellen liegt bevorzugt im Bereich von 15 mm bis 150 mm. Der Durchmesser der zylindrischen Rundzellen liegt bevorzugt im Bereich von 10 mm bis 60 mm. Innerhalb dieser Bereiche können beispielsweise Formfaktoren von beispielsweise 18 x 65 (Durchmesser mal Höhe in mm) oder 21 x 70 (Durchmesser mal Höhe in mm) bevorzugt sein. Zylindrische Rundzellen mit diesen Formfaktoren eignen sich insbesondere zur Stromversorgung elektrischer Antriebe von Kraftfahrzeugen.

Die Nennkapazität einer erfindungsgemäßen zylindrischen Rundzelle auf Lithium-Ionen-Basis beträgt bevorzugt bis zu 90000 mAh. Mit dem Formfaktor von 21 x 70 hat die Zelle in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 x 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

Eine erfindungsgemäße Zelle zeichnet sich bevorzugt durch mindestens eines der unmittelbar folgenden zusätzlichen Merkmale a. bis c. aus:
a. Die Daten ermöglichen eine eindeutige Identifikation der Zelle.
b. Die Daten ermöglichen eine Zuordnung der Zelle zu einer Maschine, die bei der Herstellung der Zelle zum Einsatz kam.
c. Die Daten umfassen Informationen zu Komponenten der Zelle, insbesondere zu dem Verbundkörper und/oder den mindestens zwei Elektroden.

In bevorzugten Ausführungsformen sind die unmittelbar vorstehenden Merkmale a. bis c. in Kombination realisiert.

Es gibt vier besonders bevorzugte Varianten, gemäß denen die erfindungsgemäße Zelle mit dem RFID-Transponder ausgestattet sein kann.

Gemäß Variante 1 zeichnet sich die Zelle durch mindestens eines der unmittelbar folgenden zusätzlichen Merkmale a. bis d. aus:
a. Bei dem Verbundkörper handelt es sich um einen zylindrischen Wickel, in dem die mindestens zwei Elektroden und der mindestens eine Separator bandförmig und spiralförmig aufgerollt vorliegen.
b. Der Verbundkörper umfasst einen axialen Hohlraum.
c. Der RFID-Transponder ist in dem axialen Hohlraum angeordnet.
d. Der RFID-Transponder ist als Wickelkern ausgebildet oder Teil eines Wickelkerns.

In bevorzugten Ausführungsformen sind die unmittelbar vorstehenden Merkmale a. bis c. in Kombination realisiert. In besonders bevorzugten Ausführungsformen sind die unmittelbar vorstehenden Merkmale a. bis d. in Kombination realisiert.

Gemäß Variante 2 zeichnet sich die Zelle durch mindestens eines der unmittelbar folgenden zusätzlichen Merkmale a. bis c. aus:
a. Bei dem Verbundkörper handelt es sich um einen zylindrischen Wickel, in dem die mindestens zwei Elektroden und der mindestens eine Separator bandförmig und spiralförmig aufgerollt vorliegen.
b. Der RFID-Transponder ist in einen Klebestreifen integriert oder auf einem Klebestreifen angeordnet, der mantelseitig auf den Wickel aufgeklebt ist.
c. Der Wickel wird durch den Klebestreifen zusammengehalten.

In bevorzugten Ausführungsformen sind die unmittelbar vorstehenden Merkmale a. und b. in Kombination realisiert. In besonders bevorzugten Ausführungsformen sind die unmittelbar vorstehenden Merkmale a. bis c. in Kombination realisiert.

Gemäß Variante 3 zeichnet sich die Zelle durch mindestens eines der unmittelbar folgenden zusätzlichen Merkmale a. bis c. aus:
a. Bei dem Gehäuse handelt es sich um ein zylindrisches Metallgehäuse umfassend einen umlaufenden Gehäusemantel und an den Stirnseiten einen kreisförmigen Boden und einen Deckel.
b. Der Boden und/oder der Gehäusemantel sind auf ihrer Außenseite von einer elektrisch isolierenden Schicht bedeckt.
c. Der RFID-Transponder ist zwischen dem Boden oder dem Gehäusemantel und der elektrisch isolierenden Schicht angeordnet oder in die elektrisch isolierende Schicht integriert.

In bevorzugten Ausführungsformen sind die unmittelbar vorstehenden Merkmale a. bis c. in Kombination realisiert.

Gemäß Variante 4 zeichnet sich die Zelle durch mindestens eines der unmittelbar folgenden zusätzlichen Merkmale a. bis c. aus:
a. Bei dem Gehäuse handelt es sich um ein zylindrisches Metallgehäuse umfassend einen umlaufenden Gehäusemantel und an den Stirnseiten einen kreisförmigen Boden und einen Deckel.
b. Der RFID-Transponder ist in einen elektrisch isolierenden Ring integriert oder als Ring ausgebildet, wobei der Ring auf dem Deckel angeordnet ist.
c. Der Ring ist auf dem Deckel mittels eines Schrumpfschlauchs fixiert, der auf den Gehäusemantel aufgebracht ist.

In bevorzugten Ausführungsformen sind die unmittelbar vorstehenden Merkmale a. bis c. in Kombination realisiert.

Jede der Varianten ist mit besonderen Vorteilen verbunden, die im Zusammenhang mit den nachfolgend beschriebenen Ausführungsbeispielen noch näher beschrieben werden.

Das erfindungsgemäße Verfahren dient zur Herstellung einer zur Energiespeicherung befähigten elektrochemischen Zelle mit
- einem Gehäuse, das einen Innenraum einschließt, und
- einem in dem Innenraum angeordneten Verbundkörper, der aus mindestens zwei Elektroden und mindestens einem Separator gebildet ist,

Erfindungsgemäß wird die Zelle bei der Herstellung mit einem RFID-Transponder ausgestattet, dessen Speicher Informationen zu der Zelle enthält.

Das erfindungsgemäße Verfahren zur Herstellung einer Zelle gemäß der oben beschriebenen Variante 1 umfasst bevorzugt die unmittelbar folgenden Merkmale a. bis c.:
a. Bei dem Verbundkörper handelt es sich um einen zylindrischen Wickel, in dem die mindestens zwei Elektroden und der mindestens eine Separator bandförmig und spiralförmig aufgerollt vorliegen.
b. Der Verbundkörper umfasst einen axialen Hohlraum.
c. Der RFID-Transponderwird in dem axialen Hohlraum angeordnet.

In einerweiteren bevorzugten Ausführungsform des erfindungsgemäßen Verfahrens zur Herstellung einer Zelle gemäß der oben beschriebenen Variante 1 umfasst es die unmittelbar folgenden Merkmale a. und b.:
a. Der RFID-Transponder ist als Wickelkern ausgebildet oder Teil eines Wickelkerns.
b. Die mindestens zwei Elektroden und der mindestens eine Separator sind bandförmig ausgebildet und werden zur Bildung des Verbundkörpers spiralförmig auf dem Wickelkern aufgerollt, so dass ein zylindrischer Wickel resultiert.

Das erfindungsgemäße Verfahren zur Herstellung einer Zelle gemäß der oben beschriebenen Variante 2 umfasst bevorzugt die unmittelbar folgenden Merkmale a. bis c.:
a. Die mindestens zwei Elektroden und der mindestens eine Separator sind bandförmig ausgebildet und werden zur Bildung des Verbundkörpers spiralförmig aufgerollt, so dass ein zylindrischer Wickel resultiert.
b. Der Wickel wird durch einen Klebestreifen zusammengehalten, der mantelseitig auf den Wickel aufgeklebt ist.
c. Der RFID-Transponder ist in den Klebestreifen integriert oder auf dem Klebestreifen angeordnet.

Das erfindungsgemäße Verfahren zur Herstellung einer Zelle gemäß der oben beschriebenen Variante 3 umfasst bevorzugt die unmittelbar folgenden Merkmale a. bis c.:
a. Bei dem Gehäuse handelt es sich um ein zylindrisches Metallgehäuse umfassend einen umlaufenden Gehäusemantel und an den Stirnseiten einen kreisförmigen Boden und einen Deckel.
b. Der Boden und/oder der Gehäusemantel werden auf ihrer Außenseite mit einer elektrisch isolierenden Schicht abgedeckt.
c. Der RFID-Transponder wird zwischen dem Boden oder dem Gehäusemantel und der elektrisch isolierenden Schicht angeordnet oder er ist in die elektrisch isolierende Schicht integriert.

Das erfindungsgemäße Verfahren zur Herstellung einer Zelle gemäß der oben beschriebenen Variante 4 umfasst bevorzugt die unmittelbar folgenden Merkmale a. bis c.:
a. Bei dem Gehäuse handelt es sich um ein zylindrisches Metallgehäuse umfassend einen umlaufenden Gehäusemantel und an den Stirnseiten einen kreisförmigen Boden und einen Deckel.
b. Der RFID-Transponder ist in einen elektrisch isolierenden Ring integriert oder als Ring ausgebildet, wobei der Ring auf dem Deckel angeordnet wird.
c. Der Ring wird auf dem Deckel mittels eines Schrumpfschlauchs fixiert, der auf den Gehäusemantel aufgebracht wird.

Im Grunde sind in dem RFID-Tag der erfindungsgemäßen Zelle beliebige Informationen speicherbar, die berührungslos ausgelesen und gegebenenfalls auch geändert oder ergänzt werden können. Insbesondere in Ausführungsformen, in denen sich der RFID-Tag im Inneren des Zellgehäuses befindet, sind die Informationen geschützt.

### KURZBESCHREIBUNG DER ZEICHNUNGEN

Weitere Vorteile und Aspekte der Erfindung ergeben sich aus den Ansprüchen und aus der nachfolgenden Beschreibung von bevorzugten Ausführungsbeispielen der Erfindung, die nachfolgend anhand der Figuren erläutert sind.

In den Figuren zeigen schematisch
Fig. 1 eine Ausführungsform eines Verbundkörpers für eine erfindungsgemäße Zelle (Draufsicht schräg von vorn),
Fig. 2 einen RFID-Transponder, der zum Einsatz im Rahmen der vorliegenden Erfindung besonders geeignet ist (Draufsicht schräg von oben),
Fig. 3 eine weitere mögliche Ausführungsform eines Verbundkörpers für eine erfindungsgemäße Zelle (Draufsicht schräg von vorn),
Fig. 4 eine Ausführungsform einer erfindungsgemäßen Zelle (Querschnittsdarstellung),
Fig. 5 eine weitere Ausführungsform einer erfindungsgemäßen Zelle (Querschnittsdarstellung), und
Fig. 6 eine weitere Ausführungsform einer erfindungsgemäßen Zelle (Querschnittsdarstellung).

### DETAILLIERTE BESCHREIBUNG DER AUSFÜHRUNGSBEISPIELE

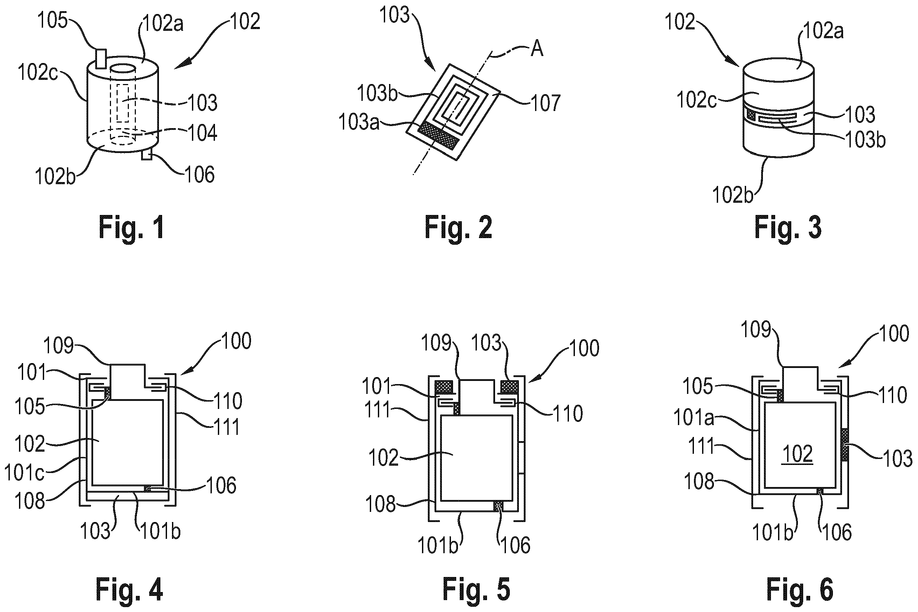

Fig. 1 zeigt einen Verbundkörper 102 handelt es sich um einen zylindrischen Wickel, in dem die mindestens zwei Elektroden und der mindestens eine Separator bandförmig und spiralförmig aufgerollt vorliegen. Der Verbundkörper 102 weist eine obere Stirnseite 102a und eine untere Stirnseite 102b sowie einen Verbundkörperaußenmantel 102c auf. Aus der oberen Stirnseite 102a tritt ein Stromleiter 105 aus, der beispielsweise an eine positive Elektrode angekoppelt ist. Aus der unteren Stirnseite 102b tritt ein Stromleiter 106 aus, der beispielsweise an eine negative Elektrode angekoppelt ist.

In seinem Zentrum umfasst derVerbundkörper 102 einen axialen Hohlraum 104 auf. In diesem ist ein RFID-Transponder 103 angeordnet, der beispielsweise Informationen zu den Elektroden des Verbundkörpers 102 bereitstellen kann.

Fig. 2 zeigt einen auf einem Träger 107 angeordneten passiven RFID-Transponder 103. Dieser umfasst eine Antenne 103b sowie einen Schaltkreis 103a, der auch einen Datenspeicher umfasst. Bei dem Träger 107 kann es sich beispielsweise um eine Folie handeln. In besonderen Ausführungsformen kann die Folie eine Klebefolie sein, die rückseitig eine Klebeschicht aufweist. Transponder in derlei Ausführungsformen sind mit Dicken von weit unter einem Millimeter erhältlich. Es ist problemlos möglich, sie spiralförmig aufzuwickeln, etwa um die Achse A. In aufgewickelter Form kann ein solcher Transponder beispielsweise in den axialen Hohlraum 104 des in Fig. 1 dargestellten Verbundkörpers 102 eingeschoben werden. Es ist aber auch möglich, einen aufgewickelten Transponder 103 als Wickelkern zu benutzen und beispielsweise den in Fig. 1 dargestellten Verbundkörper 102 durch Aufwickeln von Elektroden und Separatoren auf dem aufgewickelten Transponder 103 zu bilden.

Fig. 3 zeigt einen weiteren Verbundkörper 102 für eine erfindungsgemäße Zelle. Dieser ist ebenfalls als zylindrischer Wickel ausgebildet, der aus bandförmigen Elektroden und Separatoren hergestellt wurde, und weist eine obere Stirnseite 102a und eine untere Stirnseite 102b sowie einen Verbundkörperaußenmantel 102c auf. In aller Regel wird ein solcher spiralförmig aufgerollter Wickel durch ein Klebeband stabilisiert, das auf seinen Verbundkörperaußenmantel geklebt wird. Vorliegend wird an Stelle eines Klebebands ein RFID-Transponder 103 auf den Verbundkörperaußenmantel 102c geklebt. Besonders geeignet sind hierfür RFID-Transponder, die eine Klebefolie oder ein Etikett umfassen, auf dem sie angeordnet sind.

Fig. 4 zeigt eine erfindungsgemäße Zelle 100. Diese umfasst ein zylindrisches Metallgehäuse 101 umfassend einen umlaufenden Gehäusemantel 101c und an den Stirnseiten einen kreisförmigen Boden 101b. Das Gehäuse 101 ist gebildet aus dem Gehäusebecher 108 und dem Deckel 109. Der Deckel 109 weist einen kreisrunden Rand auf, auf den eine elektrisch isolierende Dichtung 110 aufgezogen ist. In dem Gehäuse ist der zylindrische Verbundkörper 102 angeordnet, der aus spiralförmig aufgewickelten Elektroden und Separatoren besteht. Aus der oberen Stirnseite des Verbundkörpers 102 tritt ein Stromleiter 105 aus, der eine positive Elektrode des Verbundkörpers 102 elektrisch mit dem Deckel 109 verbindet. Aus der unteren Stirnseite des Verbundkörpers 102 tritt ein Stromleiter 106 aus, der eine negative Elektrode des Verbundkörpers 102 elektrisch mit dem Gehäusebecher 108 verbindet. Weite Teile der Außenseite des Gehäuses 101 sind elektrisch isoliert. Der Gehäusemantel 101c ist durch den Schrumpfschlauch 111 isoliert. Der Boden 101b ist durch den RFID-Transponder 103 abgeschirmt. Besonders geeignet sind auch hierfür RFID-Transponder, die eine Klebefolie oder ein Etikett umfassen, auf dem sie angeordnet sind.

Fig. 5 zeigt eine erfindungsgemäße Zelle 100. Diese umfasst ein zylindrisches Metallgehäuse 101 umfassend einen umlaufenden Gehäusemantel 101c und an den Stirnseiten einen kreisförmigen Boden 101b. Das Gehäuse 101 ist gebildet aus dem Gehäusebecher 108 und dem Deckel 109. Der Deckel 109 weist einen kreisrunden Rand auf, auf den eine elektrisch isolierende Dichtung 110 aufgezogen ist. In dem Gehäuse ist der zylindrische Verbundkörper 102 angeordnet, der aus spiralförmig aufgewickelten Elektroden und Separatoren besteht. Aus der oberen Stirnseite des Verbundkörpers 102 tritt ein Stromleiter 105 aus, der eine positive Elektrode des Verbundkörpers 102 elektrisch mit dem Deckel 109 verbindet. Aus der unteren Stirnseite des Verbundkörpers 102 tritt ein Stromleiter 106 aus, der eine negative Elektrode des Verbundkörpers 102 elektrisch mit dem Gehäusebecher 108 verbindet. Der Gehäusemantel 101c ist durch den Schrumpfschlauch 111 elektrisch isoliert. Ein RFID-Transponder 103 ist als Ring ausgebildet, wobei der Ring auf dem Deckel 109 angeordnet ist. Der Ring ist auf dem Deckel 109 mittels des Schrumpfschlauchs 111 fixiert, der auf den Gehäusemantel 101c aufgebracht ist.

Fig. 6 zeigt eine erfindungsgemäße Zelle 100. Diese umfasst ein zylindrisches Metallgehäuse 101 umfassend einen umlaufenden Gehäusemantel 101c und an den Stirnseiten einen kreisförmigen Boden 101b. Das Gehäuse 101 ist gebildet aus dem Gehäusebecher 108 und dem Deckel 109. Der Deckel 109 weist einen kreisrunden Rand auf, auf den eine elektrisch isolierende Dichtung 110 aufgezogen ist. In dem Gehäuse ist der zylindrische Verbundkörper 102 angeordnet, der aus spiralförmig aufgewickelten Elektroden und Separatoren besteht. Aus der oberen Stirnseite des Verbundkörpers 102 tritt ein Stromleiter 105 aus, der eine positive Elektrode des Verbundkörpers 102 elektrisch mit dem Deckel 109 verbindet. Aus der unteren Stirnseite des Verbundkörpers 102 tritt ein Stromleiter 106 aus, der eine negative Elektrode des Verbundkörpers 102 elektrisch mit dem Gehäusebecher 108 verbindet. Der Gehäusemantel 101c ist durch den Schrumpfschlauch 111 elektrisch isoliert. Ein RFID-Transponder 103 ist zwischen dem Schrumpfschlauch 111 und dem Gehäusemantel 101c angeordnet.

## Patentansprüche

1. Zur Energiespeicherung befähigte elektrochemische Zelle (100) mit
- einem Gehäuse (101), das einen Innenraum einschließt, und
- einem in dem Innenraum angeordneten Verbundkörper (102), der aus mindestens zwei Elektroden und mindestens einem Separator gebildet ist,
wobei die Zelle mit einem RFID-Transponder (103) ausgestattet ist, dessen Speicher Daten zu der Zelle enthält.

2. Zelle nach Anspruch 1 mit mindestens einem der folgenden zusätzlichen Merkmale:
a. Die Daten ermöglichen eine eindeutige Identifikation der Zelle.
b. Die Daten ermöglichen eine Zuordnung der Zelle zu einer Maschine, die bei der Herstellung der Zelle zum Einsatz kam.
c. Die Daten umfassen Informationen zu Komponenten der Zelle (100), insbesondere zu dem Verbundkörper (102) und/oder den mindestens zwei Elektroden.

3. Zelle nach Anspruch 1 oder nach Anspruch 2 mit mindestens einem der folgenden zusätzlichen Merkmale:
a. Bei dem Verbundkörper (102) handelt es sich um einen zylindrischen Wickel, in dem die mindestens zwei Elektroden und der mindestens eine Separator bandförmig und spiralförmig aufgerollt vorliegen.
b. Der Verbundkörper (102) umfasst einen axialen Hohlraum (104).
c. Der RFID-Transponder (103) ist in dem axialen Hohlraum (104) angeordnet.
d. Der RFID-Transponder (103) ist als Wickelkern ausgebildet oder Teil eines Wickelkerns.

4. Zelle nach Anspruch 1 oder nach Anspruch 2 mit den folgenden zusätzlichen Merkmalen:
a. Bei dem Verbundkörper (102) handelt es sich um einen zylindrischen Wickel, in dem die mindestens zwei Elektroden und der mindestens eine Separator bandförmig und spiralförmig aufgerollt vorliegen.
b. Der RFID-Transponder (103) ist in einen Klebestreifen integriert oder auf einem Klebestreifen angeordnet, der mantelseitig auf den Wickel aufgeklebt ist.
c. Der Wickel wird durch den Klebestreifen zusammengehalten.

5. Zelle nach Anspruch 1 oder nach Anspruch 2 mit mindestens einem der folgenden zusätzlichen Merkmale:
a. Bei dem Gehäuse (101) handelt es sich um ein zylindrisches Metallgehäuse umfassend einen umlaufenden Gehäusemantel (101c) und an den Stirnseiten einen kreisförmigen Boden (101b) und einen Deckel (109).
b. Der Boden (101b) und/oder der Gehäusemantel (101c) sind auf ihrer Außenseite von einer elektrisch isolierenden Schicht (111) bedeckt.
c. Der RFID-Transponder (103) ist zwischen dem Boden (101b) oder dem Gehäusemantel (101c) und der elektrisch isolierenden Schicht (111) angeordnet oder in die elektrisch isolierende Schicht integriert.

6. Zelle nach Anspruch 1 oder nach Anspruch 2 mit mindestens einem der folgenden zusätzlichen Merkmale:
a. Bei dem Gehäuse (101) handelt es sich um ein zylindrisches Metallgehäuse umfassend einen umlaufenden Gehäusemantel (101c) und an den Stirnseiten einen kreisförmigen Boden (101b) und einen Deckel (109).
b. Der RFID-Transponder (103) ist in einen elektrisch isolierenden Ring integriert oder als Ring ausgebildet, wobei der Ring auf dem Deckel angeordnet ist.
c. Der Ring ist auf dem Deckel mittels eines Schrumpfschlauchs fixiert, der auf den Gehäusemantel aufgebracht ist.

7. Verfahren zur Herstellung einer zur Energiespeicherung befähigten elektrochemischen Zelle (100) mit
- einem Gehäuse (101), das einen Innenraum einschließt, und
- einem in dem Innenraum angeordneten Verbundkörper (102), der aus mindestens zwei Elektroden und mindestens einem Separator gebildet ist,
wobei die Zelle bei der Herstellung mit einem RFID-Transponder (103) ausgestattet wird, dessen Speicher Informationen zu der Zelle (100) enthält.

8. Verfahren nach Anspruch 7 mit mindestens einem der folgenden zusätzlichen Merkmale:
a. Bei dem Verbundkörper (102) handelt es sich um einen zylindrischen Wickel, in dem die mindestens zwei Elektroden und der mindestens eine Separator bandförmig und spiralförmig aufgerollt vorliegen.
b. Der Verbundkörper (102) umfasst einen axialen Hohlraum (104).
c. Der RFID-Transponder (103) wird in dem axialen Hohlraum (104) angeordnet.

9. Verfahren nach Anspruch 7 mit mindestens einem der folgenden zusätzlichen Merkmale:
a. Der RFID-Transponder (103) ist als Wickelkern ausgebildet oder Teil eines Wickelkerns.
b. Die mindestens zwei Elektroden und der mindestens eine Separator sind bandförmig ausgebildet und werden zur Bildung des Verbundkörpers spiralförmig auf dem Wickelkern aufgerollt, so dass ein zylindrischer Wickel resultiert.

10. Verfahren nach Anspruch 7 mit mindestens einem der folgenden zusätzlichen Merkmale:
a. Die mindestens zwei Elektroden und der mindestens eine Separator sind bandförmig ausgebildet und werden zur Bildung des Verbundkörpers (102) spiralförmig aufgerollt, so dass ein zylindrischer Wickel resultiert.
b. Der Wickel wird durch einen Klebestreifen zusammengehalten, der mantelseitig auf den Wickel aufgeklebt ist.
c. Der RFID-Transponder (103) ist in den Klebestreifen integriert oder auf dem Klebestreifen angeordnet.

11. Zelle nach Anspruch 7 mit mindestens einem der folgenden zusätzlichen Merkmale:
a. Bei dem Gehäuse (101) handelt es sich um ein zylindrisches Metallgehäuse umfassend einen umlaufenden Gehäusemantel (101c) und an den Stirnseiten einen kreisförmigen Boden (101b) und einen Deckel (109).
b. Der Boden (101b) und/oder der Gehäusemantel (101c) werden auf ihrer Außenseite mit einer elektrisch isolierenden Schicht (111) abgedeckt.
c. Der RFID-Transponder (103) wird zwischen dem Boden (101b) oder dem Gehäusemantel (101c) und der elektrisch isolierenden Schicht (111) angeordnet oder er ist in die elektrisch isolierende Schicht integriert.

12. Zelle nach Anspruch 7 mit mindestens einem der folgenden zusätzlichen Merkmale:
a. Bei dem Gehäuse (101) handelt es sich um ein zylindrisches Metallgehäuse umfassend einen umlaufenden Gehäusemantel (101c) und an den Stirnseiten einen kreisförmigen Boden (101b) und einen Deckel (109).
b. Der RFID-Transponder (103) ist in einen elektrisch isolierenden Ring integriert oderals Ring ausgebildet, wobei der Ring auf dem Deckel (109) angeordnet wird.
c. Der Ring wird auf dem Deckel (109) mittels eines Schrumpfschlauchs (111) fixiert, der auf den Gehäusemantel (101c) aufgebracht wird.
